# EUROPEAN PATENT SPECIFICATION

(11) **EP 4 151 430 B1**
(45) Date of publication and mention of the grant of the patent: **30.07.2025**
(21) Application number: 21829413.0
(22) Date of filing: 04.06.2021
(51) Int. Cl.: B60C 11/00, B60C 1/00, B60C 11/03, B60C 11/12, B60C 11/13, C08L 7/00, C08C 19/25, C08L 15/00

(54) **TIRE**
REIFEN
PNEUMATIQUE

(30) Priority: 25.06.2020 JP 2020109956
(43) Date of publication of application: 22.03.2023
(73) Proprietor: Sumitomo Rubber Industries, Ltd., Kobe-shi, Hyogo 651-0072 (JP)
(72) Inventor: NAKATANI, Masako, Kobe-shi, Hyogo 651-0072 (JP)
(74) Representative: Manitz Finsterwald Patent- und Rechtsanwaltspartnerschaft mbB
(86) International application number: PCT/JP2021/021391
(87) International publication number: WO 2021/261221

(56) References cited:
- WO-A1-2013/180257
- WO-A1-2013/180257
- WO-A1-2014/178336
- WO-A1-2014/178336
- JP-A- 2008 174 638
- JP-A- 2008 174 638
- JP-A- 2013 514 428
- JP-A- 2013 514 428
- JP-A- 2015 081 085
- JP-A- 2015 081 085
- JP-A- 2018 184 497
- JP-A- 2018 184 497
- JP-A- H0 640 214
- JP-A- H0 640 214
- US-A1- 2007 137 745
- US-A1- 2007 137 745
- US-A1- 2019 061 425
- US-A1- 2019 061 425

## Description

### TECHNICAL FIELD

The present invention relates to a tire.

### BACKGROUND ART

Patent document 1 discloses a tire comprising a tread part having a cap rubber being grounded to a road surface and a base rubber being arranged on the inner side of the cap rubber in the tire radial direction, wherein the cap rubber is configured to be a rubber layer having a relatively high rigidity, the base rubber is configured to be a rubber layer having a relatively low rigidity, and the thickness of the base rubber is offset in the tire width direction to reduce the difference in ground contact pressure, improving braking performance.

A further pneumatic tire is described in Patent Document 2.

### PRIOR ART DOCUMENT

### Patent Document

Patent Document 1: JP 2014-162242 A
Patent Document 2: JP 2015-081085 A

### SUMMARY OF THE INVENTION

### PROBLEM TO BE SOLVED BY THE INVENTION

However, with the tire disclosed in Patent document 1, the followability to the road surface is easily lost due to the cap rubber having a relatively high rigidity and, moreover, the base rubber being low in rigidity cannot produce a sufficient reaction force, so that there is room for improvement with steering stability on a wet road surface. Furthermore, there is also a concern that abrasion resistance drastically deteriorates when the base rubber is exposed, so that there is also room for improvement with abrasion resistance in total up to the final stage of traveling.

An object of the present invention is to provide a tire having an improved overall performance of steering stability performance on a wet road surface and abrasion resistance in total up to the final stage of traveling.

### MEANS TO SOLVE THE PROBLEM

As a result of intensive studies, the inventor has found that the previously-described problem could be solved by providing a tread part with three or more rubber layers and providing the concentration gradient of a free sulfur amount toward a rubber layer on the outer side in the tire radial direction from a rubber layer on the inner side in the tire radial direction, and completed the present invention.

In other words, the present invention relates to:
[1] A tire having a tread at least comprising a first layer constituting a tread surface, a second layer being arranged adjacent on the inner side of the first layer in the radial direction, and a third layer being arranged adjacent on the inner side of the second layer in the radial direction, wherein the first layer, the second layer, and the third layer are composed of a rubber composition comprising a rubber component, wherein a free sulfur amount of the rubber composition constituting the third layer is greater than a free sulfur amount of the rubber composition constituting the second layer, and wherein the free sulfur amount of the rubber composition constituting the second layer is greater than a free sulfur amount of the rubber composition constituting the first layer.
[2] The tire of [1], wherein a difference (X₁-X₂) between a mass change rate X₁ (%) before and after soaking the rubber composition constituting the first layer in toluene at 23°C for 24 hours, which mass change rate X₁ (%) is measured in accordance with JIS K 6258:2016, and a mass change rate X₂ (%) before and after soaking the rubber composition constituting the second layer in toluene at 23°C for 24 hours, which mass change rate X₂ (%) is measured in accordance with JIS K 6258:2016, is 50% or less.
[3] The tire of [1] or [2], wherein each of a tan δ at 0°C of the rubber composition constituting the first layer and the rubber composition constituting the second layer is 0.45 or more.
[4] The tire of any one of [1] to [3], wherein the difference between hardness of the rubber composition constituting the second layer and hardness of the rubber composition constituting the first layer is 5 or less.
[5] The tire of any one of [1] to [4], wherein each of a specific gravity of the rubber composition constituting the first layer and that of the rubber composition constituting the second layer is 1.25 or less.
[6] The tire of any one of [1] to [5], wherein the specific gravity of the rubber composition constituting the second layer is less than 1.20.
[7] The tire of any one of [1] to [6], wherein an acetone extraction amount AE₂ of the rubber composition constituting the second layer is greater than an acetone extraction amount AE₁ of the rubber composition constituting the first layer.
[8] The tire of any one of [1] to [7], wherein a modulus of the rubber composition constituting the second layer at 100% elongation at 23°C is greater than a modulus of the rubber composition constituting the first layer at 100% elongation at 23°C.
[9] The tire of any one of [1] to [8], wherein each of the rubber composition constituting the first layer and the rubber composition constituting the second layer comprises a butadiene rubber.
[10] The tire of any one of [1] to [9], wherein each of the rubber composition constituting the first layer and the rubber composition constituting the second layer comprises a reinforcing filler and a silane coupling agent, and each of a content of silica in the reinforcing filler in the rubber composition constituting the first layer and a content of silica in the reinforcing filler in the rubber composition constituting the second layer is 80% by mass or more.
[11] The tire of [10], wherein each of the silane coupling agent comprised in the rubber composition constituting the first layer and the silane coupling agent comprised in the rubber composition constituting the second layer is a mercapto-based silane coupling agent.
[12] The tire of any one of [1] to [11], wherein the rubber composition constituting the second layer comprises a resin component.
[13] The tire of any one of [1] to [12], wherein the thickness of the third layer is less than each of the thickness of the first layer and the thickness of the second layer.
[14] The tire of any one of [1] to [13], wherein the tread has a land part being partitioned by a plurality of circumferential grooves, and a deepest part of the groove bottom of at least one of the circumferential grooves is formed to be located on the inner side of the outermost part of the second layer in the tire radial direction.
[15] The tire of [14], wherein the land part is provided with a sipe, neither end of which sipe is opened to the circumferential groove.

### EFFECTS OF THE INVENTION

According to the present invention, a tire having an improved overall performance of steering stability performance on a wet road surface and abrasion resistance in total up to the final stage of traveling is provided.

### BRIEF DESCRIPTION OF THE DRAWINGS

FIG. 1 is an enlarged cross-sectional view in which is shown a part of a tread of a tire according to one embodiment of the present disclosure.
FIG. 2 is a schematic view of a ground contact surface of the tire when the tread is pressed against a flat surface.

### EMBODIMENT FOR CARRYING OUT THE INVENTION

A tire being one embodiment of the present disclosure is a tire having a tread at least comprising a first layer constituting a tread surface, a second layer being arranged adjacent on the inner side of the first layer in the radial direction, and a third layer being arranged adjacent on the inner side of the second layer in the radial direction, wherein the first layer, the second layer, and the third layer are composed of a rubber composition comprising a rubber component, wherein a free sulfur amount of the rubber composition constituting the third layer is greater than a free sulfur amount of the rubber composition constituting the second layer, and wherein the free sulfur amount of the rubber composition constituting the second layer is greater than a free sulfur amount of the rubber composition constituting the first layer.

Comprised in a vulcanized rubber composition being vulcanized with sulfur is an unreacted sulfur, or in other words, free sulfur, which is present in a state not chemically bonded to a rubber component and is not contributing to a crosslinking reaction of the rubber component. In the present disclosure, the "free sulfur" means free sulfur being present in a state not chemically bonded to the rubber component and not contributing to the crosslinking reaction and "a free sulfur amount" means an amount of free sulfur comprised in the vulcanized rubber composition.

Although it is not intended to be bound by theory, in the present disclosure, the following can be considered as a mechanism in which steering stability performance on a wet road surface and abrasion resistance can be improved in a well-balanced manner.

Free sulfur, not chemically bonded to the rubber component and not contributing to the crosslinking reaction, reacts with the rubber component due to heat dissipation during traveling on an uppermost surface (a tread surface) being in contact with a road surface. As a result, abrasion resistance on the tread surface can be improved and it is made possible for the rubber composition constituting the first layer to maintain hardness equivalent to that immediately after vulcanization.

While sulfur in the rubber composition constituting the first layer is to be consumed due to heat dissipation during traveling in this way, sulfur in the rubber composition can move between rubber layers due to the concentration gradient. Then, providing the concentration gradient of the free sulfur amount toward a rubber layer on the outer side in the tire radial direction from a rubber layer on the inner side in the tire radial direction makes it possible to continually cause a predetermined amount of sulfur to reach the first layer and friction between the tread surface and the road surface makes it easy for free sulfur and the rubber component to bond at a tread surface portion and makes it possible to increase rigidity, making it easy for a reaction force to be produced. Moreover, the rubber layers in total do not accompany a large change in rigidity and the followability to the road surface is not impaired, making it possible to improve steering stability performance on a wet road surface. Moreover, it is considered that, at this time, improvement in abrasion resistance at the tread surface portion can also be achieved. Furthermore, it is considered that, when the second layer is exposed, a crosslinking form equivalent to that of the first layer is secured and a drastic decrease in abrasion resistance can be prevented, so that no drastic deterioration in abrasion resistance is invited, making it possible to maintain and improve abrasion resistance in total up to the final stage of traveling.

Conversely, it is considered that providing the concentration gradient of the free sulfur amount toward the rubber layer on the inner side in the tire radial direction from the rubber layer on the outer side in the tire radial direction causes the free sulfur amount consumed in the first layer to increase and causes the crosslinking density of the first layer to be too large, so that steering stability performance on a wet road surface deteriorates. Moreover, it is considered that it also causes a decrease in abrasion resistance after the first layer is worn to be large.

A difference (X₁-X₂) between a mass change rate X₁ (%) before and after soaking the rubber composition constituting the first layer in toluene at 23°C for 24 hours, which mass change rate X₁ (%) is measured in accordance with Japanese Industrial Standard JIS K 6258:2016, and a mass change rate X₂ (%) before and after soaking the rubber composition constituting the second layer in toluene at 23°C for 24 hours, which mass change rate X₂ (%) is measured in accordance with Japanese Industrial Standard JIS K 6258:2016, is preferably 50% or less.

Each of a tan δ at 0°C of the rubber composition constituting the first layer and the rubber composition constituting the second layer is preferably 0.45 or more.

The difference between hardness of the rubber composition constituting the second layer and hardness of the rubber composition constituting the first layer is preferably 5 or less.

Each of the specific gravity of the rubber composition constituting the first layer and that of the rubber composition constituting the second layer is preferably 1.25 or less. The specific gravity of the rubber composition constituting the first layer is more preferably 1.24 or less, further preferably 1.23 or less, and particularly preferably 1.22 or less. The specific gravity of the rubber composition constituting the second layer is more preferably 1.23 or less, further preferably 1.21 or less, and particularly preferably less than 1.20. It is considered that setting the specific gravity to be within the previously-described range makes it possible to decrease energy applied to the tread when the tire rolls, prevent consumption of free sulfur inside the rubber layers, and improve steering stability on a wet road surface, and abrasion resistance in total up to the final stage of traveling.

An acetone extraction amount AE₂ of the rubber composition constituting the second layer is preferably greater than an acetone extraction amount AE₁ of the rubber composition constituting the first layer.

A modulus of the rubber composition constituting the second layer at 100% elongation at 23°C is preferably greater than a modulus of the rubber composition constituting the first layer at 100% elongation at 23°C.

Each of the rubber composition constituting the first layer and the rubber composition constituting the second layer preferably comprises a butadiene rubber.

Preferably, each of the rubber composition constituting the first layer and the rubber composition constituting the second layer comprises a reinforcing filler and a silane coupling agent, and each of a content of silica in the reinforcing filler in the rubber composition constituting the first layer and a content of silica in the reinforcing filler in the rubber composition constituting the second layer is 80% by mass or more.

Each of the silane coupling agent comprised in the rubber composition constituting the first layer and the silane coupling agent comprised in the rubber composition constituting the second layer is preferably a mercapto-based silane coupling agent.

The rubber composition constituting the second layer preferably comprises a resin component.

The thickness of the third layer is preferably less than the thickness of each of the first layer and the second layer.

Preferably, the tread has a land part being partitioned by a plurality of circumferential grooves, and a deepest part of the groove bottom of at least one of the circumferential grooves is formed to be located on the inner side of the outermost part of the second layer in the tire radial direction.

The land part is preferably provided with a sipe, neither end of which sipe is opened to the circumferential groove.

A procedure of producing the tire being one embodiment of the present disclosure will be described in detail below. Besides, in the specification, a numerical range shown using the recitation "to" is to include the numerical values at both ends thereof.

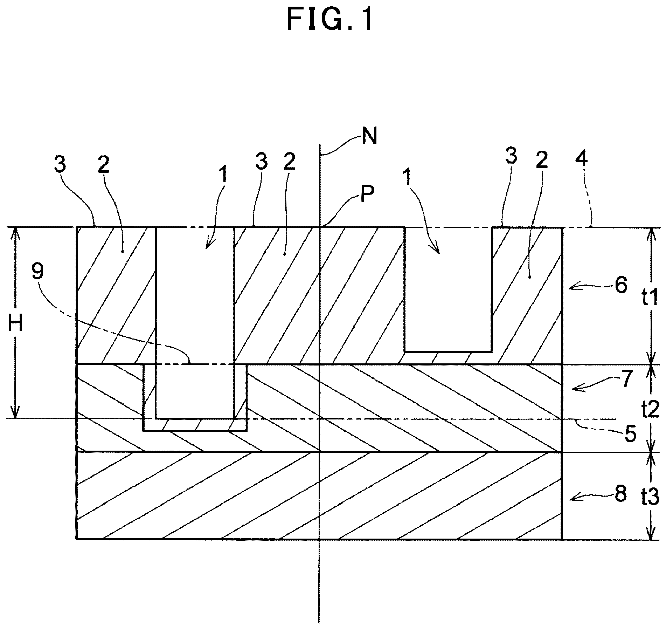

FIG. 1 is an enlarged cross-sectional view showing a part of a tread of a tire. In FIG. 1, the up-down direction is the tire radial direction, the left-right direction is the tire width direction, and the direction being perpendicular to the paper surface is the tire circumferential direction.

As shown, a tread part of the tire of the present disclosure comprises a first layer 6, a second layer 7, and a third layer 8, an outer surface of the first layer 6 constitutes a tread surface 3, the second layer 7 is arranged adjacent on the inner side of the first layer 6 in the radial direction, and the third layer 8 is arranged adjacent on the inner side of the second layer 7 in the radial direction. The first layer 6 typically corresponds to a cap tread. The second layer 7 and the third layer 8 typically correspond to a base tread or an under tread. Moreover, as long as the object of the present disclosure is achieved, it can be further have one or a plurality of rubber layers between the third layer 8 and a belt layer.

In FIG. 1, a two-way arrow t1 is the thickness of the first layer 6, a two-way arrow t2 is the thickness of the second layer 7, and a two-way arrow t3 is the thickness of the third layer 8. In FIG. 1, an arbitrary point on a tread surface, on which tread surface no grooves are formed, is shown as a symbol P. A straight line shown with a symbol N passes through a point P and is a straight perpendicular line (a normal line) with respect to a contact plane of this point P. In the specification, thicknesses t1, t2, and t3 are measured along a normal line N being drawn from the point P on the tread surface, at which point P no grooves are present, in a cross section of FIG. 1.

While the thickness t1 of the first layer 6 is not particularly limited in the present disclosure, from the viewpoint of wet grip performance, it is preferably 1.0 mm or more, more preferably 1.5 mm or more, and further preferably 2.0 mm or more. On the other hand, from the viewpoint of heat generation, the thickness t1 of the first layer 6 is preferably 10.0 mm or less, more preferably 9.0 mm or less, and further preferably 8.0 mm or less.

While the thickness t2 of the second layer 7 is not particularly limited in the present disclosure, it is preferably 1.5 mm or more, more preferably 2.0 mm or more, and further preferably 2.5 mm or more. Moreover, the thickness t2 of the second layer 7 is preferably 10.0 mm or less, more preferably 9.0 mm or less, and further preferably 8.0 mm or less.

While the thickness t3 of the third layer 8 is not particularly limited in the present disclosure, it is preferably 1.0 mm or more and more preferably 1.5 mm or more. Moreover, the thickness t3 of the third layer 8 is preferably 10.0 mm or less, more preferably 9.0 mm or less, and further preferably 8.0 mm or less.

The tread of the present disclosure has a circumferential groove 1 in a plurality, which circumferential groove 1 extends continuously in the tire circumferential direction. While the circumferential groove 1 extends linearly along the circumferential direction, it is not to be limited to such as an aspect, so that, for example, it may extend in a wave-like, sinusoidal wave-like, or zigzag manner along the circumferential direction.

The tread of the present disclosure has a land part 2 being partitioned by the circumferential groove 1 in the tire width direction.

A groove depth H of the circumferential groove 1 is determined by the distance between an extension line 4 of the land part 2 and an extension line 5 of a deepest part of the groove bottom of the circumferential groove 1. Besides, in a case that the circumferential groove 1 is in a plurality, for example, the groove depth H is the distance between the extension line 4 of the land part 2 and the extension line 5 of the deepest part of the groove bottom of the circumferential groove 1 having the greatest groove depth of the plurality of circumferential grooves 1 (the circumferential groove 1 on the left in FIG. 1).

In the present disclosure, the circumferential groove 1 is formed such that the deepest part of the groove bottom of the circumferential groove 1 is located on the inner side of the outermost part of the second layer 7 of the land part 2 in the tire radial direction. Specifically, immediately below the circumferential groove 1 (on the inner side in the tire radial direction), the second layer 7 has a recessed part being recessed on the inner side of the above-mentioned outermost part in the tire radial direction, and a part of the first layer 6 is formed with a predetermined thickness within the above-mentioned recessed part of the second layer 7. The circumferential groove 1 is formed such that it gets into the inner side of the recessed part of the second layer 7 beyond the outermost part of the second layer 7.

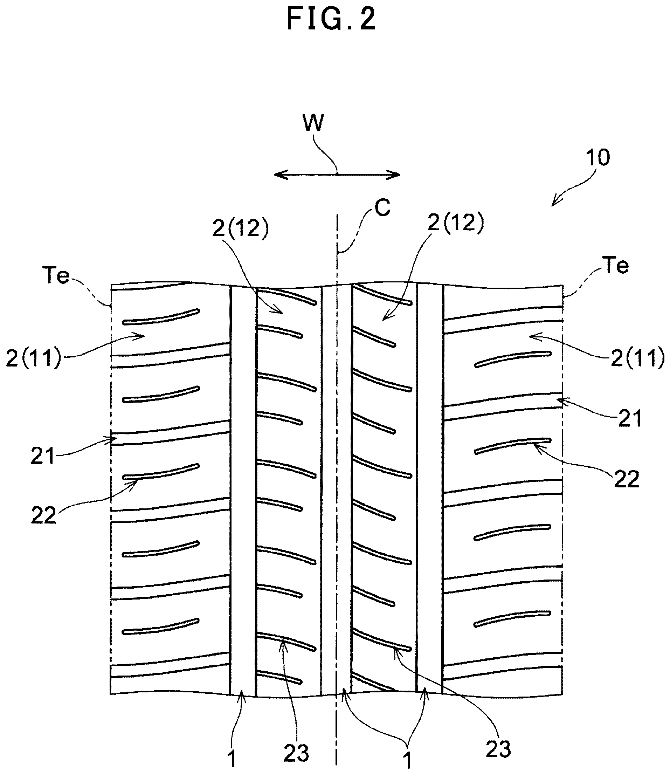

FIG. 2 is a schematic view of a ground contact surface when the tread is pressed against a flat surface. As shown in FIGS. 1 and 2, a tread 10 constituting the tire according to the present disclosure has a circumferential groove 1 extending continuously in a tire circumferential direction C (extending linearly along the tire circumferential direction in the example in FIG. 2), and a lateral groove 21 and sipes 22, 23 extending in the width direction.

The tread 10 has the circumferential groove 1 in a plurality, which circumferential groove 1 extends continuously in the tire circumferential direction C. While three of the circumferential grooves 1 are provided in FIG. 2, the number of circumferential grooves is not particularly limited, so that it may be 2 to 5, for example. Moreover, while the circumferential groove 1 extends linearly along the circumferential direction in the present disclosure, it is not limited to such an aspect, so that, for example, it may extend in a wave-like, sinusoidal wave-like, or zigzag manner along the circumferential direction.

The tread 10 has the land part 2 being partitioned by the plurality of circumferential grooves 1 in a tire width direction W. A shoulder land part 11 is a land part in a pair, which land part is formed between the circumferential groove 1 and a tread end Te. A center land part 12 is a land part formed between the pair of shoulder land parts 11. While two of the center land parts 12 is provided in FIG. 2, the number of center land parts is not particularly limited, so that it may be 1 to 5, for example.

The land part 2 is preferably provided with a lateral groove and/or sipe traversing the land part 2. Moreover, the land part 2 is more preferably provided with a sipe, neither end of which sipe is opened to the circumferential groove 1. In FIG. 2, the shoulder land part 11 is provided with the plurality of shoulder lateral grooves 21, a terminal end of each of which plurality of shoulder lateral grooves 21 is opened to the circumferential groove 1, and the plurality of shoulder sipes 22, neither end of which plurality of shoulder sipes 22 is opened to the circumferential groove 1, and the center land part 12 is provided with a plurality of center sipes 23, one end of which plurality of center sipes 23 is opened to the circumferential groove 1, but they are not limited to such an aspect.

Besides, in the specification, the "groove" including the circumferential groove and the lateral groove refers to a recess having a width greater than at least 2.0 mm. On the other hand, in the specification, the "sipe" refers to a narrow notch having a width of 2.0 mm or less and preferably 0.5 to 2.0 mm.

In the present disclosure, unless otherwise specified, dimensions and angles of each member of the tire are measured with the tire being incorporated into the normal rim and filled with air so as to achieve the normal internal pressure. At the time of measurement, no load is applied to the tire. Besides, in the specification, the "normal rim" is a rim defined, in a standard system including a standard on which the tire is based, for each tire by the standard, and is, for example, a standard rim for JATMA, a "Design Rim" for TRA, and a "Measuring Rim" for ETRTO. In the specification, the "normal internal pressure" is an air pressure defined for each tire by the standard, and is a maximum air pressure for JATMA, a maximum value described in the table "TIRE LOAD LIMITS AT VARIOUS COLD INFLATION PRESSURES" for TRA, or "INFLATION PRESSURE" for ETRTO.

"The free sulfur amount" in the present disclosure may be determined as follows. A sulfur amount Ts (% by mass) in a vulcanized rubber test piece is calculated using the oxygen flask combustion method according to Japanese Industrial Standard JIS K 6233:2016 "Rubber - Determination (quantitative) of total sulfur content by ion chromatography". Next, the previously-described test piece is soaked in acetone for 24 hours to extract the soluble component in accordance with Japanese Industrial Standard JIS K 6229:2015 "Rubber-Determination (quantitative) of solvent extract". The test piece with the soluble component being extracted is heated and dried and solvent in the test piece is removed, and then a sulfur amount As (% by mass) in the test piece is calculated using the oxygen flask combustion method according to Japanese Industrial Standard JIS K 6233:2016. A difference (Ts - As) between the sulfur amount Ts and the sulfur amount As can be calculated to determine the free sulfur amount. Besides, the free sulfur amount in the rubber composition can be appropriately adjusted in accordance with a compounding amount of sulfur, and the type and a compounding amount of a vulcanization accelerator.

In the present disclosure, a free sulfur amount of the rubber composition constituting the third layer 8 is greater than a free sulfur amount of the rubber composition constituting the second layer 7, and the free sulfur amount of the rubber composition constituting the second layer 7 is greater than a free sulfur amount of the rubber composition constituting the first layer 6. The difference between the free sulfur amount of the rubber composition constituting the third layer 8 and the free sulfur amount of the rubber composition constituting the second layer 7 is preferably 0.1% or more, more preferably 0.2% or more, and further preferably 0.3% or more. The difference between the free sulfur amount of the rubber composition constituting the second layer 7 and the free sulfur amount of the rubber composition constituting the first layer 6 is preferably 0.1% or more, more preferably 0.2% or more, and further preferably 0.3% or more.

In accordance with Japanese Industrial Standard JIS K 6229: 2015, "the acetone extraction amount" in the present disclosure can be calculated using the below-described equation by soaking each of vulcanized rubber test pieces in acetone for 24 hours to extract the soluble component and measuring mass of each of the vulcanized rubber test pieces before and after extraction. Besides, the acetone extraction amount is to be an indicator of the concentration of an organic low-molecular compound within a plasticizer comprised in the vulcanized rubber composition. Moreover, in the present disclosure, unless otherwise indicated, the acetone extraction amount is a value measured by cutting out a sample from the tire. Acetone extraction amount (%) = {(mass of rubber test piece before extraction - mass of rubber test piece after extraction)/(mass of rubber test piece before extraction)} × 100.

An acetone extraction amount AE₂ of the rubber composition constituting the second layer 7 is preferably greater than an acetone extraction amount AE₁ of the rubber composition constituting the first layer 6. A difference (AE₂ - AE₁) between the acetone extraction amount AE₂ of the rubber composition constituting the second layer 7 and an acetone extraction amount AE₂ of the rubber composition constituting the first layer 6 is preferably 1 to 20% by mass, more preferably 2 to 15% by mass, and further preferably 3 to 10% by mass. It is considered that setting the difference between the acetone extraction amounts to be within the previously-described range makes it easy for free sulfur to move within the plasticizer component in the second layer 7, consequently making it easy for free sulfur to transfer from the second layer 7 to the first layer 6 during traveling.

A ratio (AE₂ / AE₁) of the acetone extraction amount AE₂ of the rubber composition constituting the second layer 7 with respect to the acetone extraction amount AE₁ of the rubber composition constituting the first layer 6 is preferably 1.05 to 2.00, more preferably 1.10 to 1.80, further preferably 1.15 to 1.60, and particularly preferably 1.20 to 1.40. It is considered that setting the ratio of the acetone extraction amounts to be within the previously-described range makes it easy for free sulfur to move within the plasticizer component in the second layer 7, consequently making it easy for free sulfur to transfer from the second layer 7 to the first layer 6 during traveling.

In the present disclosure, as a measure reflecting the crosslinking density of the rubber composition, a mass change rate before and after toluene swelling is used. In the present disclosure, the mass change rate before and after toluene swelling can be calculated by measuring a mass change rate (%) before and after soaking each of vulcanized test rubber compositions in toluene at 23°C for 24 hours in accordance with Japanese Industrial Standard JIS K 6258:2016 "Rubber, vulcanized or thermoplastic-Determination of the effect of liquids". It indicates that the less the numerical value, the higher the crosslinking density. Moreover, in the present disclosure, unless otherwise indicated, the mass change rate before and after toluene swelling is a value measured by cutting out a sample from the tire.

A difference (X₁-X₂) between a mass change rate X₁ (%) before and after soaking the rubber composition constituting the first layer 6 in toluene at 23°C for 24 hours, which mass change rate X₁ (%) is measured in accordance with Japanese Industrial Standard JIS K 6258:2016, and a mass change rate X₂ (%) before and after soaking the rubber composition constituting the second layer 7 in toluene at 23°C for 24 hours, which mass change rate X₂ (%) is measured in accordance with Japanese Industrial Standard JIS K 6258:2016, is preferably 50% or less, more preferably 40% or less, further preferably 35% or less, and particularly preferably 30% or less. Setting the difference in mass change rate to be within the previously-described range cause the crosslinking density of the first layer 6 to be low and the difference thereof with the crosslinking density of the second layer 7 to decrease, making it possible to continually cause a predetermined amount of free sulfur to reach the first layer 6 and allowing good steering stability performance on a wet road surface and abrasion resistance to be sustained.

A modulus at 100% elongation in the present disclosure refers to tensile stress at 100% elongation in the grain direction, which modulus is measured under the condition of a tensile speed of 3.3 mm/second under an atmosphere at 23°C in accordance with JIS K 6251:2017 "Rubber, vulcanized or thermoplastic-Determination of tensile stress-strain properties". A sample can be of the No. 7 Dumbbell type, for example. A modulus at 100% elongation of the rubber composition constituting the first layer 6 is preferably 1.6 MPa or more, more preferably 1.8 MPa or more, and further preferably 2.0 MPa or more. Moreover, a modulus at 100% elongation of the rubber composition constituting the second layer 7 is preferably 1.8 MPa or more, more preferably 2.0 MPa or more, and further preferably 2.2 MPa or more. Besides, an upper limit of the modulus at 100% elongation of the rubber composition constituting the first layer 6, the second layer 7, and the third layer 8 is not particularly limited. Moreover, from the viewpoint of the effect of the present disclosure, the modulus at 100% elongation at 23°C of the rubber composition constituting the second layer 7 is preferably greater than the modulus at 100% elongation at 23°C of the rubber composition constituting the first layer 6. Besides, in the specification, "the grain direction" means the rolling direction when a rubber sheet is formed by an extrusion or shear process and matches the tire circumferential direction.

"0°C tan δ" in the present disclosure refers to loss tangent tan δ under conditions of temperature 0°C, initial strain 10%, dynamic strain 1%, and frequency 10 Hz. In a case of producing rubber compositions for testing (that can be made to have length 20 mm × width 4 mm × thickness 1 mm, for example) by cutting them out from a tire, they are cut out from a tread part of the tire such that the tire circumferential direction is a long side and the tire radial direction is the thickness direction. 0°C tan δ of the rubber composition constituting the first layer 6 is preferably 0.45 or more, more preferably 0.50 or more, further preferably 0.55 or more, and particularly preferably 0.60 or more. Moreover, 0°C tan δ of the rubber composition constituting the second layer 7 is preferably 0.45 or more, more preferably 0.50 or more, and further preferably 0.55 or more. Setting 0°C tan δ to be in the above-described range not only allows a good wet grip performance to be obtained because of hysteresis loss, but also makes it possible to cause heat to be generated on the tread surface 3 even when traveling on a wet road surface or on a low-temperature road surface, making it possible to further improve abrasion resistance. On the other hand, from the viewpoint of fuel efficiency, 0°C tan δ of the rubber composition constituting the first layer 6, the second layer 7, and the third layer 8 is preferably 1.60 or less, more preferably 1.40 or less, further preferably 1.20 or less, and particularly preferably 1.00 or less. Besides, a value of 0°C tan δ of the rubber composition constituting the first layer 6 is preferably greater than a value of 0°C tan δ of the rubber composition constituting the second layer 7.

Rubber hardness in the present disclosure means a shore hardness (Hs) measured using a type A durometer under the atmosphere of 23°C in accordance with Japanese Industrial Standard JIS K 6253-3:2012 "Rubber, vulcanized or thermoplastic-Determination of hardness". Specifically, the shore hardness (Hs) at 23°C of each of vulcanized rubber layers can be measured by cutting a tire in the radial direction at a width of 20 mm, smoothing the cutting surface, and then pressing a type A durometer against it from the cross-sectional direction. In the present disclosure, the difference between rubber hardness of the rubber composition constituting the first layer 6 and rubber hardness of the rubber composition constituting the second layer 7 is preferably 6 or less, more preferably 5 or less, further preferably 4 or less, and particularly preferably 3 or less. It is considered that setting the difference in rubber hardness to be in the above-described range makes it possible to suppress an excessive performance change when the second layer 7 is brought to be the uppermost surface due to abrasion.

### <Rubber component>

The rubber composition constituting each rubber layer of the tread (rubber composition for the tread) according to the present disclosure preferably comprises at least one selected from the group consisting of an isoprene-based rubber, a styrene-butadiene rubber (SBR), and a butadiene rubber (BR) as rubber components. The rubber components constituting the first layer 6 and the second layer 7 preferably comprise the SBR, more preferably comprise the SBR and the BR, or may be rubber components consisting of only the SBR and the BR. The rubber component constituting the third layer 8 preferably comprises the isoprene-based rubber, more preferably comprises the isoprene-based rubber and the BR, or may be a rubber component consisting of only the isoprene-based rubber and the BR.

### (Isoprene-based rubbers)

Examples of the isoprene-based rubbers include a natural rubber (NR), an isoprene rubber (IR), a modified NR, a denatured NR, a denatured IR, and the like. As the NRs, those common in the tire industry such as SIR20, RSS#3, TSR20, and the like, for example, can be used. The IRs are not particularly limited, and, as the IRs, those common in the tire industry such as IR2200 and the like, for example, can be used. Examples of the modified NR include a deproteinized natural rubber (DPNR), an ultra pure natural rubber, and the like, examples of the denatured NR include an epoxidized natural rubber (ENR), a hydrogenated natural rubber (HNR), a grafted natural rubber, and the like, and examples of the denatured IR include an epoxidized isoprene rubber, a hydrogenated isoprene rubber, a grafted isoprene rubber, and the like. These isoprene-based rubbers may be used alone or two or more thereof may be used in combination.

In the rubber component constituting the first layer 6 and the second layer 7, a content of the isoprene-based rubber (preferably NR) in 100% by mass of the rubber component when the rubber composition comprises the isoprene-based rubber (preferably NR) is, from the viewpoint of wet grip performance, preferably 50% by mass or less, more preferably 40% by mass or less, further preferably 30% by mass or less, and particularly preferably 20% by mass or less. Moreover, while a lower limit of a content of the isoprene-based rubber when the rubber composition comprises the isoprene-based rubber is not particularly limited, it may be 1% by mass or more, 3% by mass or more, 5% by mass or more, 10% by mass or more, or 15% by mass or more, for example.

In the rubber component constituting the third layer 8, a content of the isoprene-based rubber (preferably NR) in 100% by mass of the rubber component when the rubber composition comprises the isoprene-based rubber (preferably NR) is preferably 30% by mass or more, more preferably 40% by mass or more, and further preferably 50% by mass or more. Moreover, an upper limit of a content of the isoprene-based rubber in the rubber component is not particularly limited and it may be 100% by mass.

### (SBR)

The SBR is not particularly limited, and examples thereof include a solution-polymerized SBR (S-SBR), an emulsion-polymerized SBR (E-SBR), denatured SBRs thereof (a denatured S-SBR, a denatured E-SBR), and the like. Examples of the denatured SBR include an SBR denatured at its terminal and/or main chain, a denatured SBR coupled with tin, a silicon compound, etc. (a denatured SBR of condensate or having a branched structure, etc.), and the like. Furthermore, hydrogenated additives of these SBRs (hydrogenated SBRs) and the like may also be used. Among them, an S-SBR is preferable and a denatured S-SBR is more preferable.

Examples of the denatured SBR include a denatured SBR into which a functional group commonly used in this field is introduced. Examples of the above-described functional group include, for example, an amino group (preferably an amino group in which a hydrogen atom of the amino group is substituted with a C₁₋₆ alkyl group), an amide group, a silyl group, an alkoxysilyl group (preferably a C₁₋₆ alkoxysilyl group), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably a C₁₋₆ alkoxy group), a hydroxyl group, an oxy group, an epoxy group, and the like. Besides, these functional groups may have a substituent. Examples of the substituent include, for example, a functional group such as an amino group, an amide group, an alkoxysilyl group, a carboxyl group, and a hydroxyl group. Moreover, examples of the denatured SBR include a hydrogenated SBR, an epoxidized SBR, a tin-denatured SBR, and the like.

As the SBR, an oil-extended SBR can be used, or a non-oil-extended SBR can be used. When the oil-extended SBR is used, an oil-extended amount of SBR, that is, a content of an oil-extended oil comprised in the SBR, is preferably 10 to 50 parts by mass based on 100 parts by mass of a rubber solid content of the SBR.

The SBRs listed previously may be used alone or two or more thereof may be used in combination. As the SBRs listed previously, those manufactured by/commercially available from Sumitomo Chemical Co., Ltd., JSR Corporation, Asahi Kasei Corporation, Zeon Corporation, ZS Elastomer Co., Ltd., etc., for example, may be used.

A styrene content of the SBR is preferably 15% by mass or more and more preferably 20% by mass or more, from the viewpoints of securing damping in the tread part and wet grip performance. Moreover, it is preferably 60% by mass or less and more preferably 50% by mass or less, from the viewpoints of temperature dependence of grip performance and abrasion resistance. Besides, in the specification, the styrene content of the SBR is calculated by ¹H-NMR measurement.

A vinyl content of the SBR is preferably 10 mol% or more, more preferably 13 mol% or more, and further preferably 16 mol% or more, from the viewpoints of ensuring reactivity with silica, rubber strength, and abrasion resistance. Moreover, the vinyl content of the SBR is preferably 70 mol% or less, more preferably 65 mol% or less, and further preferably 60 mol% or less, from the viewpoints of preventing temperature dependence from increasing, wet grip performance, elongation at break, and abrasion resistance. Besides, in the specification, the vinyl content (1,2-bond butadiene unit amount) of the SBR is measured by infrared absorption spectrometry.

A weight-average molecular weight (Mw) of the SBR is preferably 150,000 or more, more preferably 200,000 or more, and further preferably 250,000 or more, from the viewpoint of abrasion resistance. Moreover, the Mw is preferably 2,500,000 or less and more preferably 2,000,000 or less, from the viewpoints of cross-linking uniformity, and the like. Besides, the Mw can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

In the rubber component constituting the first layer 6 and the second layer 7, a content of the SBR in 100% by mass of the rubber component when the rubber composition comprises the SBR is, from the viewpoint of wet grip performance, preferably 50% by mass or more, more preferably 60% by mass or more, further preferably 65% by mass or more, and particularly preferably 70% by mass or more. Moreover, an upper limit of a content of the SBR in the rubber component is not particularly limited and it may be 100% by mass. Besides, a content of the SBR in 100% by mass of the rubber component when the rubber composition constituting the third layer 8 comprises the SBR is not particularly limited.

### (BR)

The BR is not particularly limited, and those commonly used in the tire industry can be used, such as, for example, a BR having a cis content of less than 50 mol% (a low cis BR), a BR having a cis content of 90 mol% or more (a high cis BR), a rare earth-based butadiene rubber synthesized using a rare earth element-based catalyst (a rare earth-based BR), a BR containing a syndiotactic polybutadiene crystal (an SPB-containing BR), a denatured BR (a high cis denatured BR, a low cis denatured BR), and the like. Examples of the denatured BR include a BR denatured with a functional group or the like similar to that described in the SBRs above. These BRs may be used alone or two or more thereof may be used in combination.

As the high cis BR, those commercially available from Zeon Corporation, Ube Industries, Ltd., JSR Corporation, etc. can be used, for example. When a high cis BR is comprised, abrasion resistance can be improved. The cis content is preferably 95 mol% or more, more preferably 96 mol% more, further preferably 97 mol% or more, and particularly preferably 98 mol% or more. Besides, in the specification, the cis content (cis-1,4-bond butadiene unit amount) is a value calculated by infrared absorption spectrometry.

As the rare earth-based BR, those synthesized using a rare earth element-based catalyst and having a vinyl content of preferably 1.8 mol% or less, more preferably 1.0 mol% or less, and further preferably 0.8 mol% or less, and a cis content of preferably 95 mol% by mass or more, more preferably 96 mol% or more, further preferably 97 mol% or more, and particularly preferably 98 mol% or more can be used. As the rare earth-based BR, those commercially available from LANXESS, etc. can be used, for example.

Examples of the SPB-containing BR include those in which a 1,2-syndiotactic polybutadiene crystal is chemically bonded with the BR and dispersed, but not those in which the crystal is simply dispersed in the BR. As such an SPB-containing BR, those commercially available from Ube Industries, Ltd., etc., can be used.

As the denatured BR, a denatured butadiene rubber (denatured BR) denatured with a functional group comprising at least one element selected from the group consisting of silicon, nitrogen, and oxygen at its terminal and/or main chain is suitably used.

Examples of other denatured BRs include those obtained by polymerizing 1,3-butadiene with a lithium initiator and then adding a tin compound and in which a denatured BR molecule is bonded by a tin-carbon bond at its terminal (a tin-denatured BR), and the like. Moreover, the denatured BR may be hydrogenated or may not be hydrogenated.

The previously-listed BRs may be used alone or two or more thereof may be used in combination.

The glass transition temperature (Tg) of the BR is preferably -14°C or less, more preferably -17°C or less, and further preferably -20°C or less from the viewpoint of preventing low temperature fragility. On the other hand, while a lower limit of the above-mentioned Tg is not particularly limited, from the viewpoint of abrasion resistance, it is preferably -150°C or more, more preferably -120°C or more, and further preferably -110°C or more. Besides, the glass transition temperature of the BR is a value measured under the condition of a temperature increase rate of 10°C/min using differential scanning calorimetry (DSC) in accordance with Japanese Industrial Standard JIS K 7121.

A weight-average molecular weight (Mw) of the BR is preferably 300,000 or more, more preferably 350,000 or more, and further preferably 400,000 or more, from the viewpoint of abrasion resistance. Moreover, it is preferably 2,000,000 or less, and more preferably 1,000,000 or less, from the viewpoints of cross-linking uniformity and the like. Besides, the Mw can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

In the rubber component constituting the first layer 6 and the second layer 7, a content of the BR in 100% by mass of the rubber component when the rubber composition comprises the BR is, from the viewpoint of wet grip performance, preferably 50% by mass or less, more preferably 40% by mass or less, further preferably 30% by mass or less, and particularly preferably 20% by mass or less. Moreover, a lower limit of a content of the BR when the rubber composition comprises the BR is not particularly limited and it may be 1% by mass or more, 3% by mass or more, 5% by mass or more, 10% by mass or more, or 15% by mass or more, for example. Besides, a content of the BR in 100% by mass of the rubber component when the rubber composition constituting the third layer 8 comprises the BR is not particularly limited.

### (Other rubber components)

As the rubber component according to the present disclosure, rubber components other than the above-described isoprene-based rubbers, SBRs, and BRs may be contained. As other rubber components, a crosslinkable rubber component commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone or two or more thereof may be used in combination.

### <Reinforcing filler>

The rubber composition for the tread according to the present disclosure preferably comprises a reinforcing filler, which reinforcing filler includes carbon black and/or silica. Moreover, the reinforcing filler may be a reinforcing filler composed of only carbon black and silica. The rubber composition constituting the first layer 6 and the second layer 7 preferably comprises silica and more preferably comprises carbon black and silica as the reinforcing filler. The rubber composition constituting the third layer 8 preferably comprises carbon black as the reinforcing filler.

### (Carbon black)

Carbon black is not particularly limited, and those common in the tire industry can be used, such as GPF, FEF, HAF, ISAF, SAF, and the like, or specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be suitably used, and, besides these, an in-house synthetic product, and the like can also be suitably used. These carbon blacks may be used alone or two or more thereof may be used in combination.

A nitrogen adsorption specific surface area (N₂SA) of carbon black is preferably 50 m²/g or more, more preferably 80 m²/g or more, and further preferably 100 m²/g or more from the viewpoints of weather resistance and reinforcing property. Moreover, from the viewpoints of dispersibility, fuel efficiency, fracture properties, and pinch cut resistance, it is preferably 250 m²/g or less and more preferably 220 m²/g or less. Besides, the N₂SA of carbon black in the specification is a value measured according to method A of Japanese Industrial Standard JIS K 6217-2 "Carbon black for rubber-Fundamental characteristics-Part 2: Determination of specific surface area-Nitrogen adsorption methods-Single-point procedures".

When the rubber composition constituting the first layer 6 and the second layer 7 comprises carbon black, the content thereof based on 100 parts by mass of the rubber component is preferably 1 parts by mass or more, more preferably 3 parts by mass or more, and further preferably 5 parts by mass or more, from the viewpoints of weather resistance and reinforcing property. Moreover, it is preferably 40 parts by mass or less, more preferably 30 parts by mass or less, further preferably 20 parts by mass or less, and particularly preferably 10 parts by mass or less from the viewpoint of chipping resistance improvement caused by suppression of heat dissipation of the tread part. When the rubber composition constituting the third layer 8 comprises carbon black, the content thereof based on 100 parts by mass of the rubber component is preferably 20 to 100 parts by mass, more preferably 25 to 80 parts by mass, and further preferably 30 to 60 parts by mass.

### (Silica)

Silica is not particularly limited, and those common in the tire industry can be used, such as silica prepared by a dry process (anhydrous silica), silica prepared by a wet process (hydrous silica), and the like, for example. Among them, hydrous silica prepared by a wet process is preferable because it has many silanol groups. These silicas may be used alone or two or more thereof may be used in combination.

A nitrogen adsorption specific surface area (N₂SA) of silica is preferably 140 m²/g or more, more preferably 150 m²/g or more, further preferably 160 m²/g or more, and particularly 170 m²/g or more from the viewpoints of reinforcing property, and securing of damping in the tread part. Moreover, it is preferably 350 m²/g or less, more preferably 300 m²/g or less, and further preferably 250 m²/g or less, from the viewpoints of heat generation and processability. Besides, the N₂SA of silica in the specification is a value measured by the BET method according to ASTM D3037-93.

The average primary particle size of silica is preferably 20 nm or less, and more preferably 18 nm or less. The lower limit of the average primary particle size is not particularly limited and is preferably 1 nm or more, more preferably 3 nm or more, and further preferably 5 nm or more. When the average primary particle size of silica is in the above-described ranges, the dispersibility of silica can be improved more, and the reinforcing property, fracture properties, and abrasion resistance can be further improved. Besides, the average primary particle size of silica can be determined by observing it with a transmission or scanning electron microscope, measuring 400 or more primary particles of silica observed in the field of view, and averaging them.

The content of silica based on 100 parts by mass of the rubber component in the rubber composition constituting the first layer 6 and the second layer 7 is preferably 50 parts by mass or more, more preferably 60 parts by mass or more, further preferably 70 parts by mass or more, and particularly preferably 80 parts by mass or more from the viewpoints of securing of damping in the tread part and wet grip performance. Moreover, it is preferably 120 parts by mass or less, more preferably 110 parts by mass or less, further preferably 105 parts by mass or less, and particularly preferably 100 parts by mass or less from the viewpoint of reducing the specific gravity of rubber and achieving a reduced weight and the viewpoint of pinch cut resistance improvement caused by suppression of heat dissipation in the tread part. Besides, the content of silica based on 100 parts by mass of the rubber component in the rubber composition constituting the third layer 8 is not particularly limited.

### (Other reinforcing fillers)

As reinforcing fillers other than silica and carbon black, those commonly used in the tire industry conventionally, such as aluminum hydroxide, calcium carbonate, alumina, clay, talc, and the like can be used.

In the rubber compositions constituting the first layer 6 and the second layer 7, a containing percentage of silica in 100% by mass in total of silica and carbon black is preferably 60% by mass or more, more preferably 70% by mass or more, further preferably 80% by mass or more, and particularly preferably 85% by mass or more. Moreover, the containing percentage of silica is preferably 99% by mass or less, more preferably 97% by mass or less, and further preferably 95% by mass or less. It is considered that setting the containing percentage of silica to be in the previously-described range allows reducing the interaction between the reinforcing filler and free sulfur and makes it easy to transfer free sulfur to the first layer 6.

In the rubber composition constituting the third layer 8, a containing percentage of carbon black in 100% by mass in total of silica and carbon black is preferably 50% by mass or more, more preferably 75% by mass or more, further preferably 90% by mass or more, and particularly preferably 100% by mass or more.

A total content of the reinforcing filler based on 100 parts by mass of the rubber component is preferably 130 parts by mass or less, more preferably 120 parts by mass or less, further preferably 110 parts by mass or less, and particularly preferably 105 parts by mass or less from the viewpoint of reducing the specific gravity of rubber and achieving a reduced weight. Moreover, it is preferably 55 parts by mass or more, more preferably 65 parts by mass or more, further preferably 75 parts by mass or more, and particularly preferably 85 parts by mass or more from the viewpoints of reinforcing property and securing of damping in the tread part.

### (Silane coupling agent)

Silica is preferably used in combination with a silane coupling agent. The silane coupling agent is not particularly limited, and any silane coupling agent conventionally used in combination with silica in the tire industry can be used, and examples thereof include, for example, a mercapto-based silane coupling agent as follows; a sulfide-based silane coupling agent such as bis(3-triethoxysilylpropyl)disulfide and bis(3-triethoxysilylpropyl)tetrasulfide; a thioester-based silane coupling agent such as 3-octanoylthio-1-propyltriethoxysilane, 3-hexanoylthio-1-propyltriethoxysilane, and 3-octanoylthio-1-propyltrimethoxysilane; a vinyl-based silane coupling agent such as vinyltriethoxysilane and vinyltrimethoxysilane; an amino-based silane coupling agent such as 3-aminopropyltriethoxysilane, 3-aminopropyltrimethoxysilane, and 3-(2-aminoethyl) aminopropyltriethoxysilane; a glycidoxy-based silane coupling agent such as γ-glycidoxypropyltriethoxysilane and γ-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane, and the like. Among them, the silane coupling agent containing a sulfide-based silane coupling agent and/or a mercapto-based silane coupling agent is preferable. These silane coupling agents may be used alone or two or more thereof may be used in combination.

The mercapto-based silane coupling agent is preferably a compound represented by the following Formula (1) and/or a compound comprising a bond unit A represented by the following Formula (2) and a bond unit B represented by the following Formula (3): 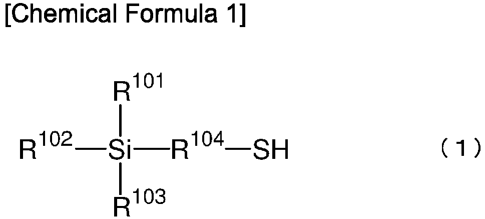 (Wherein, each of R¹⁰¹, R¹⁰², and R¹⁰³ independently represents an alkyl having 1 to 12 carbon atoms, an alkoxy having 1 to 12 carbon atoms, or a group represented by -O-(R111-O)z-R¹¹² (z pieces of R¹¹¹ each independently represents a divalent hydrocarbon group having 1 to 30 carbon atoms; R¹¹² represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and R¹⁰⁴ represents an alkylene having 1 to 6 carbon atoms.) 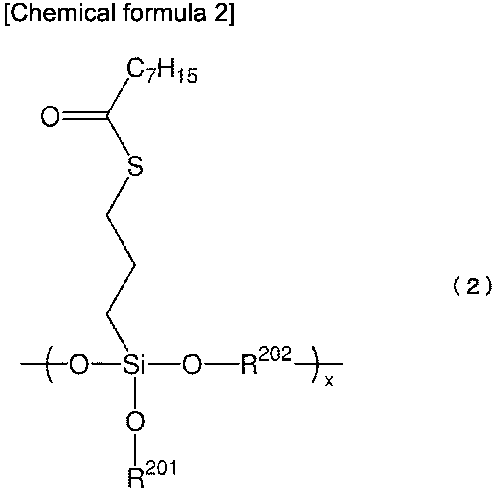 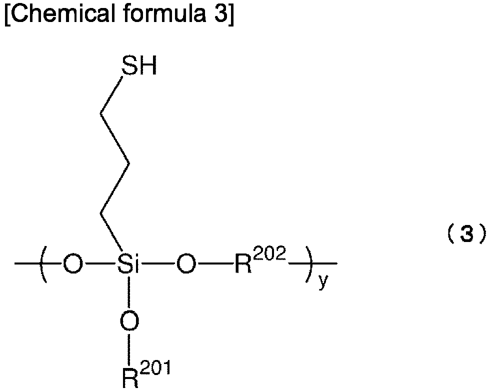 (Wherein, x represents an integer of 0 or more; y represents an integer of 1 or more; R²⁰¹ represents hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; R²⁰² represents an alkylene having 1 to 30 carbon atoms, an alkenylene having 2 to 30 carbon atoms, or an alkynylene having 2 to 30 carbon atoms; where R²⁰¹ and R²⁰² may together form a ring structure.)

Examples of the compound represented by Formula (1) include, for example, 3-mercaptopropyltrimethoxysilane, 3-mercaptopropyltriethoxysilane, 2-mercaptoethyltrimethoxysilane, 2-mercaptoethyltriethoxysilane, and a compound represented by Formula (4) below (Si363 manufactured by Evonik Degussa), and the compound represented by Formula (4) below can be suitably used. They may be used alone or two or more thereof may be used in combination.

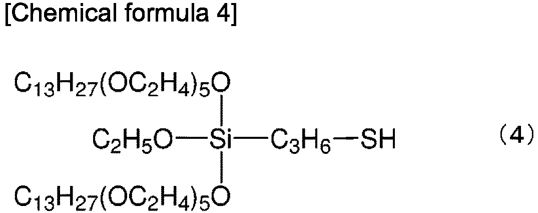

Examples of the compound comprising the bond unit A represented by Formula (2) and the bond unit B represented by Formula (3) include those manufactured by and/or commercially available from Momentive Performance Materials, and the like, for example. They may be used alone or two or more thereof may be used in combination.

A content of the silane coupling agent based on 100 parts by mass of silica when the rubber composition comprises the silane coupling agent is, from the viewpoint of enhancing the dispersibility of silica, preferably 1.0 parts by mass or more, more preferably 3.0 parts by mass or more, and further preferably 5.0 parts by mass or more. Moreover, it is preferably 30 parts by mass or less, more preferably 20 parts by mass or less, and further preferably 15 parts by mass or less, from the viewpoint of preventing a decrease in abrasion resistance.

### <Plasticizer>

The rubber composition for the tread according to the present disclosure preferably comprises a plasticizer. Examples of the plasticizer include a resin component, oil, a liquid rubber, and the like, for example.

The rubber composition constituting the second layer 7 preferably comprises a resin component. The resin component is not particularly limited, examples thereof include a petroleum resin, a terpene-based resin, a rosin-based resin, a phenol-based resin, and the like, which are commonly used in the tire industry, and they may be hydrogenated. These resin components may be used alone or two or more thereof may be used in combination.

In the specification, a "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, isoprene, and the like. As the C5-based petroleum resin, cyclopentadiene-based resins are suitably used. Examples of the cyclopentadiene-based resins include a dicyclopentadiene resin (DCPD resin), a cyclopentadiene resin, a methylcyclopentadiene resin (a cyclopentadiene-based resin not hydrogenated), and these cyclopentadiene-based resins being subjected to a hydrogenation process (hydrogenated cyclopentadiene-based resins). As the cyclopentadiene-based resins, those commercially available from Exxon Mobil Chemical, Co., etc., can be used, for example.

In the specification, "aromatic-based petroleum resins" refers to resins obtained by polymerizing a C9 fraction, and they may be hydrogenated or denatured. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are suitably used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to be processed, and good in heat generation. As the aromatic vinyl-based resin, for example, those commercially available from Kraton Corporation, Eastman Chemical Company, etc. can be used.

In the specification, a "C5-C9-based petroleum resin" refers to a resin obtained by copolymerizing the C5 fraction and the C9 fraction, and may be hydrogenated or denatured. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resins include a polyterpene resin consisting of at least one selected from terpene compounds such as α-pinene, β-pinene, limonene, dipentene, and the like; an aromatic-denatured terpene resin made from the terpene compound and an aromatic compound; a terpene phenol resin made from a terpene compound and a phenol-based compound; and these terpene-based resins being subjected to a hydrogenation process (hydrogenated terpene-based resins). Examples of the aromatic compound used as a raw material for the aromatic-denatured terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like. As the terpene-based resins, for example, those commercially available from Yasuhara Chemical, Co., Ltd., etc. can be used.

The rosin-based resin is not particularly limited, and examples thereof include, for example, a natural resin rosin, and a denatured rosin resin. As the rosin-based resin, for example, those commercially available from Arakawa Chemical, Co., Ltd., Harima Chemical, Co. Ltd., etc. can be used.

The phenol-based resin is not particularly limited, and examples thereof include a phenolformaldehyde resin, an alkylphenolformaldehyde resin, an alkylphenol acetylene resin, an oil-denatured phenolformaldehyde resin, and the like.

A softening point of the resin component is preferably 60°C or higher and more preferably 65°C or higher, from the viewpoint of wet grip performance. Moreover, it is preferably 150°C or lower, more preferably 140°C or lower, and further preferably 130°C or lower, from the viewpoints of processability and improvement in dispersibility of a rubber component with a filler. Besides, in the specification, the softening point can be defined as a temperature at which a sphere drops when the softening point specified in Japanese Industrial Standard JIS K 6220-1: 2001 is measured with a ring and ball softening point measuring device.

When the rubber composition comprises the resin component, the content of thereof based on 100 parts by mass of the rubber component is, from the viewpoint of wet grip performance, preferably 1 parts by mass or more, more preferably 5 parts by mass or more, further preferably 10 parts by mass or more, and particularly preferably 12 parts by mass or more. Moreover, it is preferably 60 parts by mass or less, more preferably 50 parts by mass or less, further preferably 40 parts by mass or less, and particularly preferably 30 parts by mass or less, from the viewpoint of suppression of heat generation.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include mild extraction solvates (MES), a treated distillate aromatic extract (TDAE), a heavy naphthenic oil, and the like.

When the rubber composition comprises the oil, the content of thereof based on 100 parts by mass of the rubber component is, from the viewpoint of processability, preferably 5 parts by mass or more, more preferably 10 parts by mass or more, and further preferably 15 parts by mass or more. Moreover, it is preferably 100 parts by mass or less, more preferably 80 parts by mass or less, and further preferably 60 parts by mass or less, from the viewpoint of abrasion resistance. Besides, in the specification, the content of oil also includes an amount of oil contained in an oil-extended rubber.

A liquid rubber is not particularly limited as long as it is a polymer in liquid state at room temperature (25°C), and examples of the liquid rubber include, for example, a liquid butadiene rubber (liquid BR), a liquid styrene-butadiene rubber (liquid SBR), a liquid isoprene rubber (liquid IR), a liquid styrene-isoprene polymer (liquid SIR), a liquid farnesene rubber, and the like. These may be used alone or two or more thereof may be used in combination.

When the rubber composition comprises the liquid rubber, the content of thereof based on 100 parts by mass of the rubber component is preferably 1 parts by mass or more, more preferably 2 parts by mass or more, further preferably 3 parts by mass or more, and particularly preferably 5 parts by mass or more. Moreover, a content of the liquid rubber is preferably 50 parts by mass or less, more preferably 40 parts by mass or less, and further preferably 20 parts by mass or less.

When the rubber composition comprises the plasticizer, a content of the plasticizer (when the plasticizer is used in a plurality, a total content of all of the plasticizers) based on 100 parts by mass of the rubber component is preferably 10 parts by mass or more, more preferably 20 parts by mass or more, and further preferably 25 parts by mass or more, from the viewpoint of wet grip performance. Moreover, it is preferably 130 parts by mass or less, more preferably 120 parts by mass or less, further preferably 110 parts by mass or less, further preferably 70 parts by mass or less, and particularly preferably 50 parts by mass or less, from the viewpoint of processability.

### <The other compounding agents>

The rubber composition for the tread according to the present disclosure can appropriately comprise compounding agents commonly used in the tire industry conventionally, such as, for example, wax, a processing aid, stearic acid, zinc oxide, an antioxidant, a vulcanizing agent, a vulcanization accelerator, and the like, in addition to the previously-described components.

When the rubber composition comprises the wax, the content thereof based on 100 parts by mass of the rubber component is, from the viewpoint of weather resistance of a rubber, preferably 0.5 parts by mass or more and more preferably 1 parts by mass or more. Moreover, it is preferably 10 parts by mass or less and more preferably 5 parts by mass or less, from the viewpoint of preventing whitening of a tire due to bloom.

Examples of the processing aid include, for example, a fatty acid metal salt, fatty acid amide, an amide ester, a silica surface active agent, a fatty acid ester, a mixture of a fatty acid metal salt and an amide ester, a mixture of a fatty acid metal salt and fatty acid amide, and the like. These processing aids may be used alone or two or more thereof may be used in combination. As the processing aids, those commercially available from Schill & Seilacher, Performance Additives, etc., for example, can be used.

When the rubber composition comprises the processing aid, the content thereof based on 100 parts by mass of the rubber component is, from the viewpoint of exhibiting the improvement effect of processability, preferably 0.5 parts by mass or more and more preferably 1 parts by mass or more. Moreover, it is preferably 10 parts by mass or less and more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt, preferably a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like, and a quinoline-based antioxidant such as 2,2,4-trimethyl-1,2-dihydroquinolin polymer, 6-ethoxy-2,2,4-trimethyl-1,2-dihydroquinolin, and the like. These antioxidants may be used alone or two or more thereof may be used in combination.

When the rubber composition comprises the antioxidant, the content thereof based on 100 parts by mass of the rubber component is, from the viewpoint of ozone crack resistance of a rubber, preferably 0.5 parts by mass or more and more preferably 1 parts by mass or more. Moreover, it is preferably 10 parts by mass or less and more preferably 5 parts by mass or less, from the viewpoints of abrasion resistance and wet grip performance.

When the rubber composition comprises the stearic acid, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of vulcanization rate.

When the rubber composition comprises the zinc oxide, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of abrasion resistance.

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

A content of sulfur based on 100 parts by mass of the rubber component when the rubber composition comprises sulfur as the vulcanizing agent is preferably 0.1 parts by mass or more and more preferably 0.3 parts by mass or more, from the viewpoint of securing a sufficient vulcanization reaction. Moreover, it is preferably 5.0 parts by mass or less, more preferably 4.0 parts by mass or less, and further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone or two or more thereof may be used in combination. Among them, sulfenamide-based, guanidine-based, and thiazole-based vulcanization accelerators are preferable, and a combined use of sulfenamide-based and guanidine-based vulcanization accelerators is more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof based on 100 parts by mass of the rubber component is preferably 1.0 parts by mass or more and more preferably 1.5 parts by mass or more. Moreover, the content of the vulcanization accelerator based on 100 parts by mass of the rubber component is preferably 8 parts by mass or less, more preferably 7 parts by mass or less, and further preferably 6 parts by mass or less. When the content of the vulcanization accelerators is within the above-described ranges, there is a tendency to be able to secure breaking strength and elongation.

The rubber composition according to the present disclosure can be manufactured by a known method. For example, it can be manufactured by kneading each of the previously-described components using a rubber kneading apparatus such as an open roll, a closed type kneader (Bunbury mixer, kneader, etc.), and the like.

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can be divided into a plurality of steps, if desired.

Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified. Vulcanizing conditions are not particularly limited, and, for example, a method of vulcanizing at 150 to 200°C for 10 to 30 minutes is exemplified.

### [Tire]

The tire according to the present disclosure comprises a tread comprising the first layer 6, the second layer 7, and the third layer 8, and may be a pneumatic tire or a non-pneumatic tire. Moreover, examples of the pneumatic tire include a tire for a passenger car, a tire for a truck/bus, a tire for a motorcycle, a high-performance tire, and the like. Besides, the high-performance tire in the specification is a tire having a particularly good grip performance and is a concept even including a racing tire used for a racing vehicle.

The tire comprising the tread comprising the first layer 6, the second layer 7, and the third layer 8 can be manufactured by a usual method using the previously-described rubber composition. In other words, the tire can be manufactured by extruding, with an extruder comprising a base having a predetermined shape, unvulcanized rubber compositions compounded with each of the above-described components based on the rubber component as necessary into shapes of the first layer 6, the second layer 7, and the third layer 8, attaching them together with other tire members on a tire molding machine, and molding them by a usual method to form an unvulcanized tire, followed by heating and pressurizing this unvulcanized tire in a vulcanizing machine.

With the tire of the present disclosure, the tire inner cavity may be provided with a sealant, a noise damping body, a sensor or tag for tire monitoring, and a mounting member thereof.

As sealants, those generally used for a tire inner circumferential surface of the tread part for puncture prevention may be suitably used. Specific examples of a sealant layer as such include what is disclosed in JP 2020-023152 A, for example. Normally, the thickness of the sealant is preferably 1 to 10 mm. Normally, the width of the sealant is preferably 85 to 115% and is preferably 95 to 105% of the maximum width of the belt layer.

Any one of noise damping bodies may be suitably used as long as it can exhibit a noise-damping effect in the tire inner cavity. Specific examples of a noise-damping body as such include what is disclosed in JP 2019-142503 A, for example. The noise-damping body is composed of a porous sponge material, for example. The sponge material is a cavernous porous structural body including, in addition to a so-called sponge itself having interconnected cells formed by foaming a rubber or a synthetic resin, a web body formed of an animal fiber, a vegetable fiber, or a synthetic fiber and the like integrally interwoven, for example. Moreover, the "porous structural body" includes not only a body having the interconnected cells but also a body having closed cells. Examples of the noise-damping body include a sponge material having interconnected cells, which sponge material is made of polyurethane. As the sponge material, for example, synthetic resin sponges such as an ether-based polyurethane sponge, an ester-based polyurethane sponge, a polyethylene sponge, and rubber sponges such as a chloroprene rubber sponge (CR sponge), an ethylene-propylene rubber sponge (EDPM sponge), a nitrile rubber sponge (NBR sponge), and the like can be suitably used, and, in particular, a polyurethane-based or polyethylene-based sponge, including an ether-based polyurethane sponge, is preferable from the viewpoints of noise damping property, lightweight property, controllability of foaming, durability, and the like.

The noise-damping body has an elongated belt-like shape having a bottom surface fixed to the inner cavity surface of the tread part and extends in the tire circumferential direction. At this time, outer ends thereof in the circumferential direction may be made to be in contact with each other to form a substantially annular shape, and, in addition, the outer ends thereof may be spaced apart in the circumferential direction.

### EXAMPLE

Although the present disclosure will be described based on Examples, the present disclosure is not to be limited to these Examples.

Various chemicals used in Examples and Comparative examples are shown below:
NR: TSR20
SBR1: Denatured S-SBR manufactured in the below-described Manufacturing example 1 (styrene content: 30% by mass, vinyl content: 52 mol%, Mw: 250,000, non-oil-extended product)
SBR2: Denatured S-SBR (styrene content: 40% by mass, vinyl content: 25 mol%, Mw: 1,100,000, non-oil-extended product)
BR: UBEPOL BR (registered trademark) 150B (vinyl content: 1.5 mol%, cis content: 97 mol%, Tg: -108 C, Mw: 440,000), manufactured by Ube Industries, Ltd.
Carbon black: Diablack N220 (N₂SA: 115 m²/g), manufactured by Mitsubishi Chemical Corporation
Silica: ULTRASIL VN3 (N₂SA: 175 m²/g, average primary particle size: 18 nm), manufactured by Evonik Degussa
Silane coupling agent 1: Si266 (bis(3-triethoxysilylpropyl)disulfide), manufactured by Evonik Degussa
Silane coupling agent 2: NXT-Z45 (mercapto-based silane coupling agent), manufactured by Momentive Performance Materials
Oil: VivaTec 500 (TDAE oil), manufactured by H&R Group
Resin component: PetroTac 100V (C5-C9-based petroleum resin, softening point: 96°C), manufactured by Tosoh Corporation
Antioxidant: Antigen 6C (N-(1,3-dimethylbutyl)-N'-phenyl-p-phenylenediamine), manufactured by Sumitomo Chemical Co., Ltd.
Wax: Sunnock N, manufactured by Ouchi Shinko Chemical Industrial Co., Ltd.
Stearic acid: Bead stearic acid "Tsubaki", manufactured by NOF CORPORATION
Zinc oxide: Zinc oxide No. 2, manufactured by Mitsui Mining & Smelting Co., Ltd.
Sulfur: Powdered sulfur, manufactured by Karuizawa lou Kabushiki Kaisha
Vulcanization accelerator 1: Nocceler CZ (N-cyclohexyl-2-benzothiazolylsulfenamide (CBS)), manufactured by Ouchi Shinko Chemical Industrial Co., Ltd.
Vulcanization accelerator 2: Nocceler D (1, 3-diphenylguanidine (DPG)), manufactured by Ouchi Shinko Chemical Industrial Co., Ltd.

### Manufacturing example 1: Synthesis of SBR1

Cyclohexane, tetrahydrofuran, styrene, and 1,3-butadiene were charged into a nitrogen-substituted autoclave reactor. The temperature of the contents of the reactor was adjusted to 20°C, and n-butyllithium was added to initiate polymerization. Polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a denaturing agent to perform reaction. After completion of the polymerization reaction, 2,6-di-tert-butyl-p-cresol was added. Next, the mixed product was removed of solvent by steam stripping and dried by a heat roll which temperature was adjusted to 110°C to obtain an SBR 1.

### (Examples and Comparative examples)

According to the compounding formulations shown in Table 1, using a 1.7 L closed Banbury mixer, all chemicals other than sulfur and vulcanization accelerators were kneaded for 1 to 10 minutes until a discharge temperature reached 150 to 160°C to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was used to extrude it into shapes of first layer (thickness: 3 mm), second layer (thickness: 3 mm), and third layer (thickness: 1 mm) of a tread and attached together with other tire members to produce an unvulcanized tire, followed by press vulcanization under a condition of 170°C for 12 minutes to obtain each of test tires shown in Table 2 (size: 205/65R15, rim: 15 × 6JJ, internal pressure: 230 kPa). Besides, the groove depth of the circumferential groove was set to be 6 mm.

### <Measurement of free sulfur amount of first, second, and third layers>

A sulfur amount Ts (% by mass) in each of vulcanized rubber test pieces was calculated using the oxygen flask combustion method according to Japanese Industrial Standard JIS K 6233:2016. Next, in accordance with Japanese Industrial Standard JIS K 6229-3:2015, the previously-described test piece was soaked in acetone for 24 hours to extract the soluble component. The test piece with the soluble component being extracted was placed in an oven and heated at 100°C for 30 minutes, solvent in the test piece was removed, and then a sulfur amount As (% by mass) in the test piece was calculated using the oxygen flask combustion method according to Japanese Industrial Standard JIS K 6233:2016. Then, a difference (Ts - As) between the sulfur amount Ts and the sulfur amount As was calculated to determine a free sulfur amount. Besides, for each of rubber test pieces for the first, second, and third layers, what was cut out from the tread part of each of test tires was used.

### <Measurement of acetone extraction amount (AE amount) of first, second, and third layers>

Each of the vulcanized rubber test pieces was soaked in acetone for 24 hours to extract the soluble component in accordance with Japanese Industrial Standard JIS K 6229:2015. Mass of each of the test pieces before and after extraction was measured and the acetone extraction amount was calculated using the below-described calculation equation. Besides, for each of rubber test pieces for the first, second, and third layers, what was cut out from the tread part of each of test tires was used. Acetone extraction amount (% by mass) = {(mass of rubber test piece before extraction - mass of rubber test piece after extraction)/(mass of rubber test piece before extraction)} × 100.

### <Measurement of toluene swelling index and mass change rate>

In accordance with Japanese Industrial Standard JIS K 6258:2016, mass before and after soaking each of vulcanized rubber test pieces in acetone for 24 hours was measured and a toluene swelling index was calculated using the below-described equation. The results are shown in Table 1. A value in which 100 is subtracted from the calculated toluene welling index is to be a mass change rate (%). It indicates that the less the toluene swelling index and the mass change rate, the higher the crosslinking density. (Toluene swelling index) = (Weight after swelling)/(Weight before swelling) × 100

### <Tensile test>

A No. 7 dumbbell type test piece was produced by cutting it out from each of rubber layers of the tread part of each of the test tires such that the tire circumferential direction is the tensile direction. In accordance with JIS K 6251:2017 "Rubber, vulcanized or thermoplastics-Determination of tensile stress-strain properties", a tensile test was performed for the No. 7 dumbbell type test piece under the condition of a tensile speed of 3.3 mm/second under an atmosphere at 23°C and the modulus at 100% elongation (Mpa) was measured.

### <Measurement of loss tangent tan δ>

Each of vulcanized rubber test pieces was produced by cutting it out at a length 20 mm × a width 4 mm × a thickness 1 mm from each of rubber layers of the tread part of each of the test tires such that the tire circumferential direction is a long side. Loss tangent tan δ of each of the rubber test pieces was measured under conditions of temperature 0°C, initial strain 10%, dynamic strain 1%, and frequency 10 Hz using an EPLEXOR series manufactured by GABO Qualimeter Testanlagen GmbH. Besides, the thickness direction of a sample was set to be the tire radial direction.

### <Measurement of rubber hardness>

The shore hardness (Hs) at 23°C of each of vulcanized rubber layers was measured by cutting a tire in the radial direction at a width of 20 mm, smoothing the cutting surface, and then pressing a type A durometer against it from the cross-sectional direction.

### <Wet steering stability performance>

Each of the test tires was mounted to all wheels of a vehicle (domestic FF with a displacement of 2,000 cc), and the vehicle was made to make ten rounds on a test course having a wet asphalt surface. Based on feeling by 10 test drivers with respect to steering stability at each of entering, turning, and exiting at the time of cornering, scoring was made in ten steps to calculate a total score, and then the total score was converted into an index with a score of Comparative example 1 as 100. It indicates that the greater the numerical value, the better the steering stability performance on a wet surface.

### <Abrasion resistance in total>

Each of the test tires was mounted to all wheels of a vehicle (domestic FF with a displacement of 2,000 cc), and a traveling distance up to exposing of a wear indicator was measured and the traveling distance was converted to an index with the traveling distance of Comparative example 1 as 100. It indicates that the greater the index, the better the abrasion resistance in total up to the final stage of traveling.

**Table 1**

| | First layer | | | | | Second layer | | | | Third layer | | | |
|---|---|---|---|---|---|---|---|---|---|---|---|---|---|
| | A1 | A2 | A3 | A4 | B1 | B2 | B3 | B4 | B5 | B6 | C1 | C2 | C3 |
| Compounding amount (parts by mass) | | | | | | | | | | | | | |
| NR | - | - | - | - | - | - | - | - | - | - | 70 | 70 | 70 |
| SBR1 | 20 | 20 | 20 | 20 | 40 | 40 | 40 | 40 | 40 | 40 | - | - | - |
| SBR2 | 65 | 65 | 65 | 65 | 45 | 45 | 45 | 45 | 45 | 45 | - | - | - |
| BR | 15 | 15 | 15 | 15 | 15 | 15 | 15 | 15 | 15 | 15 | 30 | 30 | 30 |
| Carbon black | 10 | 10 | 10 | 10 | 10 | 10 | 10 | 10 | 10 | 10 | 40 | 40 | 40 |
| Silica | 80 | 80 | 80 | 80 | 80 | 80 | 80 | 80 | 80 | 80 | - | - | - |
| Silane coupling agent 1 | 7.0 | 7.0 | 7.0 | - | 7.0 | 7.0 | 7.0 | 7.0 | - | 7.0 | - | - | - |
| Silane coupling agent 2 | - | - | - | 7.0 | - | - | - | - | 7.0 | | - | - | - |
| Oil | 5.0 | 5.0 | 5.0 | 5.0 | 5.0 | 10 | 20 | 20 | 20 | 15 | - | - | |
| Resin component | - | - | - | - | - | - | - | - | - | 5.0 | - | - | - |
| Antioxidant | 2.0 | 2.0 | 2.0 | 2.0 | 2.0 | 2.0 | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 | 1.0 | 1.0 | 1.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 | 2.0 | 2.0 | 2.0 | 2.0 |
| Sulfur | 1.0 | 1.5 | 2.0 | 1.0 | 1.0 | 1.5 | 2.0 | 1.5 | 1.5 | 1.5 | 2.0 | 2.5 | 1.0 |
| Vulcanization accelerator 1 | 2.0 | 2.0 | 2.0 | 2.0 | 2.0 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 |

| Physical property | | | | | | | | | | | | | |
|---|---|---|---|---|---|---|---|---|---|---|---|---|---|
| Free sulfur amount (% by mass) | 0.2 | 0.4 | 0.5 | 0.3 | 0.3 | 0.4 | 0.5 | 0.4 | 0.4 | 0.4 | 0.5 | 0.6 | 0.3 |
| Acetone extraction amount (% by mass) | 17 | 17 | 17 | 17 | 17 | 19 | 21 | 21 | 21 | 21 | 10 | 10 | 10 |
| Toluene swelling index | 290 | 290 | 210 | 260 | 270 | 270 | 230 | 270 | 230 | 255 | - | - | - |
| Modulus at 100% elongation (Mpa) | 2.0 | 2.5 | 3.0 | 2.0 | 2.0 | 2.2 | 2.0 | 2.0 | 2.4 | 2.2 | - | - | - |
| 0°C tan δ | 0.65 | 0.65 | 0.65 | 0.65 | 0.55 | 0.55 | 0.55 | 0.55 | 0.55 | 0.60 | - | - | - |
| Shore hardness (Hs) | 67 | 68 | 69 | 67 | 65 | 64 | 61 | 61 | 62 | 63 | - | - | - |
| Specific gravity | 1.20 | 1.21 | 1.23 | 1.20 | 1.18 | 1.19 | 1.21 | 1.18 | 1.17 | 1.18 | - | - | - |

**Table 2**

| | Example | | | | | | | Comparative example | | |
|---|---|---|---|---|---|---|---|---|---|---|
| | 1 | 2 | 3 | 4 | 5 | 6 | 7 | 1 | 2 | 3 |
| First layer compounding | A1 | A1 | A1 | A4 | A1 | A1 | A4 | A3 | A2 | A3 |
| Second layer compounding | B3 | B4 | B1 | B5 | B6 | B2 | B5 | B4 | B3 | B2 |
| Third layer compounding | C2 | C1 | C2 | C1 | C1 | C1 | C1 | C3 | C3 | C3 |
| Difference in mass change rate between first layer and second layer | 60 | 20 | 20 | 30 | 35 | 20 | 30 | 60 | 20 | 60 |
| Difference in hardness between first layer and second layer | 6 | 6 | 2 | 5 | 4 | 3 | 5 | 6 | 6 | 2 |
| Sipe, to which sipe neither end is opened to circumferential groove | None | None | None | None | None | None | Present | None | None | None |

| Index | | | | | | | | | | |
|---|---|---|---|---|---|---|---|---|---|---|
| Wet steering stability performance | 106 | 108 | 114 | 116 | 112 | 114 | 120 | 100 | 94 | 94 |
| Abrasion resistance in total | 101 | 106 | 105 | 112 | 108 | 110 | 115 | 100 | 99 | 96 |

Based on the results of Tables 1 and 2, it is evident that, with a tire of the present disclosure, in which tire a tread part is provided with three or more rubber layers and the concentration gradient of a free sulfur amount is provided toward a rubber layer on the outer side in the tire radial direction from a rubber layer on the inner side in the tire radial direction, there is an improvement in the overall performance of steering stability performance on a wet road surface and abrasion resistance in total up to the final stage of traveling (a total sum of a wet steering stability performance index and an abrasion resistance index in total).

### REFERENCE SIGNS LIST

1 ... Circumferential groove
2 ... Land part
3 ... Tread surface
4 ... Extension line of land part
5 ... Extension line of deepest part of groove bottom of circumferential groove
6 ... First layer
7 ... Second layer
8 ... Third layer
9 ... Extension line of outermost part of second layer
11 ... Shoulder land part
12 ... Center land part
21 ... Shoulder lateral groove
22 ... Shoulder sipe
23 ... Center sipe

## Claims

1. A tire having a tread at least comprising a first layer (6) constituting a tread surface (3), a second layer (7) being arranged adjacent on the inner side of the first layer (6) in the radial direction, and a third layer (8) being arranged adjacent on the inner side of the second layer (7) in the radial direction,
wherein the first layer (6), the second layer (7), and the third layer (8) are composed of a rubber composition comprising a rubber component,
wherein a free sulfur amount of the rubber composition constituting the third layer is greater than a free sulfur amount of the rubber composition constituting the second layer, and
wherein the free sulfur amount of the rubber composition constituting the second layer is greater than a free sulfur amount of the rubber composition constituting the first layer,
when the free sulfur amount is measured according to the description.

2. The tire of claim 1, wherein a difference (X₁-X₂) between a mass change rate X₁ (%) before and after soaking the rubber composition constituting the first layer in toluene at 23°C for 24 hours, which mass change rate X₁ (%) is measured in accordance with JIS K 6258:2016, and a mass change rate X₂ (%) before and after soaking the rubber composition constituting the second layer in toluene at 23°C for 24 hours, which mass change rate X₂ (%) is measured in accordance with JIS K 6258:2016, is 50% or less.

3. The tire of claim 1 or 2, wherein each of a tan δ at 0°C of the rubber composition constituting the first layer and the rubber composition constituting the second layer is 0.45 or more, when measured under conditions of temperature 0°C, initial strain 10%, dynamic strain 1%, and frequency 10 Hz.

4. The tire of any one of claims 1 to 3, wherein the difference between hardness of the rubber composition constituting the second layer and hardness of the rubber composition constituting the first layer is 5 or less, when measured according to the description.

5. The tire of any one of claims 1 to 4, wherein an acetone extraction amount AE₂ of the rubber composition constituting the second layer is greater than an acetone extraction amount AE₁ of the rubber composition constituting the first layer, when measured according to the description.

6. The tire of any one of claims 1 to 5, wherein a modulus of the rubber composition constituting the second layer at 100% elongation at 23°C is greater than a modulus of the rubber composition constituting the first layer at 100% elongation at 23°C.

7. The tire of any one of claims 1 to 6, wherein each of the rubber composition constituting the first layer (6) and the rubber composition constituting the second layer (7) comprises a butadiene rubber.

8. The tire of any one of claims 1 to 7, wherein each of the rubber composition constituting the first layer (6) and the rubber composition constituting the second layer (7) comprises a reinforcing filler and a silane coupling agent, and each of a content of silica in the reinforcing filler in the rubber composition constituting the first layer (6) and a content of silica in the reinforcing filler in the rubber composition constituting the second layer (7) is 80% by mass or more.

9. The tire of claim 8, wherein each of the silane coupling agent comprised in the rubber composition constituting the first layer (6) and the silane coupling agent comprised in the rubber composition constituting the second layer (7) is a mercapto-based silane coupling agent.

10. The tire of any one of claims 1 to 9, wherein the rubber composition constituting the second layer (7) comprises a resin component.

11. The tire of any one of claims 1 to 10, wherein the thickness of the third layer (8) is less than each of the thickness of the first layer (6) and the thickness of the second layer (7).

12. The tire of any one of claims 1 to 11, wherein the tread has a land part (2) being partitioned by a plurality of circumferential grooves (1), and a deepest part of the groove bottom of at least one of the circumferential grooves (1) is formed to be located on the inner side of the outermost part of the second layer (7) in the radial direction of the tire.

13. The tire of claim 12, wherein the land part (2) is provided with a sipe, neither end of which sipe is opened to the circumferential groove (1).

## Patentansprüche

1. Reifen mit einer Lauffläche, die mindestens eine erste Schicht (6), die eine Lauffläche (3) bildet, eine zweite Schicht (7), die in der radialen Richtung benachbart auf der Innenseite der ersten Schicht (6) angeordnet ist, und eine dritte Schicht (8), die in der radialen Richtung benachbart auf der Innenseite der zweiten Schicht (7) angeordnet ist, umfasst,
wobei die erste Schicht (6), die zweite Schicht (7) und die dritte Schicht (8) aus einer Kautschukzusammensetzung zusammengesetzt sind, die eine Kautschukkomponente umfasst,
wobei eine Menge an freiem Schwefel der Kautschukzusammensetzung, die die dritte Schicht bildet, größer ist als eine Menge an freiem Schwefel der Kautschukzusammensetzung, die die zweite Schicht bildet, und
wobei die Menge an freiem Schwefel der Kautschukzusammensetzung, die die zweite Schicht bildet, größer ist als eine Menge an freiem Schwefel der Kautschukzusammensetzung, die die erste Schicht bildet,
wenn die Menge an freiem Schwefel gemäß der Beschreibung gemessen wird.

2. Reifen nach Anspruch 1, wobei eine Differenz (X₁-X₂) zwischen einer Massenänderungsrate X₁ (%) vor und nach dem Einweichen der Kautschukzusammensetzung, die die erste Schicht bildet, in Toluol bei 23 °C für 24 Stunden, wobei die Massenänderungsrate X₁ (%) gemäß JIS K 6258:2016 gemessen wird, und einer Massenänderungsrate X₂ (%) vor und nach dem Einweichen der Kautschukzusammensetzung, die die zweite Schicht bildet, in Toluol bei 23 °C für 24 Stunden, wobei die Massenänderungsrate X₂ (%) gemäß JIS K 6258:2016 gemessen wird, 50 % oder weniger beträgt.

3. Reifen nach Anspruch 1 oder 2, wobei ein jeder des tan δ bei 0 °C der Kautschukzusammensetzung, die die erste Schicht bildet, und der Kautschukzusammensetzung, die die zweite Schicht bildet, 0,45 oder mehr beträgt, wenn unter Bedingungen von Temperatur 0 °C, Anfangsdehnung 10 %, dynamischer Dehnung 1 % und Frequenz 10 Hz gemessen wird.

4. Reifen nach einem der Ansprüche 1 bis 3, wobei die Differenz zwischen der Härte der Kautschukzusammensetzung, die die zweite Schicht bildet, und der Härte der Kautschukzusammensetzung, die die erste Schicht bildet, 5 oder weniger beträgt, wenn gemäß der Beschreibung gemessen wird.

5. Reifen nach einem der Ansprüche 1 bis 4, wobei eine Acetonextraktionsmenge AE₂ der Kautschukzusammensetzung, die die zweite Schicht bildet, größer ist als eine Acetonextraktionsmenge AE₁ der Kautschukzusammensetzung, die die erste Schicht bildet, wenn gemäß der Beschreibung gemessen wird.

6. Reifen nach einem der Ansprüche 1 bis 5, wobei ein Modul der Kautschukzusammensetzung, die die zweite Schicht bildet, bei 100% Dehnung bei 23°C größer ist als ein Modul der Kautschukzusammensetzung, die die erste Schicht bildet, bei 100% Dehnung bei 23°C.

7. Reifen nach einem der Ansprüche 1 bis 6, wobei eine jede der Kautschukzusammensetzung, die die erste Schicht (6) bildet, und der Kautschukzusammensetzung, die die zweite Schicht (7) bildet, einen Butadienkautschuk umfasst.

8. Reifen nach einem der Ansprüche 1 bis 7, wobei eine jede der Kautschukzusammensetzung, die die erste Schicht (6) bildet, und der Kautschukzusammensetzung, die die zweite Schicht (7) bildet, einen verstärkenden Füllstoff und ein Silankopplungsmittel umfasst, und ein jeder eines Gehalts an Siliciumdioxid in dem verstärkenden Füllstoff in der Kautschukzusammensetzung, die die erste Schicht (6) bildet, und eines Gehalts an Siliciumdioxid in dem verstärkenden Füllstoff in der Kautschukzusammensetzung, die die zweite Schicht (7) bildet, jeweils 80 Massen-% oder mehr beträgt.

9. Reifen nach Anspruch 8, wobei eine jedes des Silankopplungsmittels, das in der Kautschukzusammensetzung enthalten ist, die die erste Schicht (6) bildet, und des Silankopplungsmittels, das in der Kautschukzusammensetzung enthalten ist, die die zweite Schicht (7) bildet, ein Silankopplungsmittel auf Mercaptobasis ist.

10. Reifen nach einem der Ansprüche 1 bis 9, wobei die Kautschukzusammensetzung, die die zweite Schicht (7) bildet, eine Harzkomponente umfasst.

11. Reifen nach einem der Ansprüche 1 bis 10, wobei die Dicke der dritten Schicht (8) geringer ist als eine jede der Dicke der ersten Schicht (6) und der Dicke der zweiten Schicht (7).

12. Reifen nach einem der Ansprüche 1 bis 11, wobei die Lauffläche einen Landteil (2) aufweist, der durch mehrere Umfangsrillen (1) unterteilt ist, und ein tiefster Teil des Rillenbodens mindestens einer der Umfangsrillen (1) so ausgebildet ist, dass er sich in der radialen Richtung des Reifens auf der Innenseite des äußersten Teils der zweiten Schicht (7) befindet.

13. Reifen nach Anspruch 12, wobei der Landteil (2) mit einem Feineinschnitt versehen ist, wobei kein Ende des Feineinschnitts zur Umfangsrille (1) geöffnet ist.

## Revendications

1. Pneumatique comportant une bande de roulement comprenant au moins une première couche (6) constituant une surface de bande de roulement (3), une deuxième couche (7) étant disposée adjacente sur le côté intérieur de la première couche (6) dans la direction radiale et une troisième couche (8) étant disposée adjacente sur le côté intérieur de la deuxième couche (7) dans la direction radiale,
dans lequel la première couche (6), la deuxième couche (7) et la troisième couche (8) sont composées d'une composition de caoutchouc comprenant un composant caoutchouc,
dans lequel une quantité de soufre libre de la composition de caoutchouc constituant la troisième couche est supérieure à une quantité de soufre libre de la composition de caoutchouc constituant la deuxième couche, et
dans lequel la quantité de soufre libre de la composition de caoutchouc constituant la deuxième couche est supérieure à une quantité de soufre libre de la composition de caoutchouc constituant la première couche, lorsque la quantité de soufre libre est mesurée selon la description.

2. Pneumatique selon la revendication 1, dans lequel une différence (X₁ - X₂) entre le taux de variation de la masse X₁ (%) avant et après la saponification de la composition de caoutchouc constituant la première couche dans du toluène à 23 °C pendant 24 heures, lequel taux de variation de la masse X₁ (%) est mesuré selon la norme JIS K 6258 : 2016, et un taux de variation de la masse X₂ (%) avant et après saponification de la composition de caoutchouc constituant la deuxième couche dans du toluène à 23 °C pendant 24 heures, lequel taux de variation de la masse X₂ (%) est mesuré selon la norme JIS K 6258:2016, est inférieure ou égale à 50 %.

3. Pneumatique selon la revendication 1 ou la revendication 2, dans lequel chaque tan δ à 0 °C de la composition de caoutchouc constituant la première couche et de la composition de caoutchouc constituant la deuxième couche est égal ou supérieur à 0,45 lorsqu'elle est mesurée dans des conditions de température de 0 °C, de contrainte initiale de 10 %, de contrainte dynamique de 1 % et de fréquence de 10 Hz.

4. Pneumatique selon l'une quelconque des revendications 1 à 3, dans lequel la différence entre la dureté de la composition de caoutchouc constituant la deuxième couche et la dureté de la composition de caoutchouc constituant la première couche est inférieure ou égale à 5 lorsqu'elle est mesurée selon la description.

5. Pneumatique selon l'une quelconque des revendications 1 à 4, dans lequel une quantité extraite à l'acétone AE₂ de la composition de caoutchouc constituant la deuxième couche est supérieure à une quantité extraite à l'acétone AE₁ de la composition de caoutchouc constituant la première couche lorsqu'elle est mesurée selon la description.

6. Pneumatique selon l'une quelconque des revendications 1 à 5, dans lequel un module de la composition de caoutchouc constituant la deuxième couche à 100 % d'élongation à 23 °C est supérieur à un module de la composition de caoutchouc constituant la première couche à 100 % d'élongation à 23 °C.

7. Pneumatique selon l'une quelconque des revendications 1 à 6, dans lequel chacune parmi la composition de caoutchouc constituant la première couche (6) et la composition de caoutchouc constituant la deuxième couche (7) comprend un caoutchouc butadiène.

8. Pneumatique selon l'une quelconque des revendications 1 à 7, dans lequel chacune parmi la composition de caoutchouc constituant la première couche (6) et la composition de caoutchouc constituant la deuxième couche (7) comprend une charge de renforcement et un agent de couplage silane, et chacune parmi la teneur en silice dans la charge de renforcement dans la composition de caoutchouc constituant la première couche (6) et la teneur en silice dans la charge de renforcement dans la composition de caoutchouc constituant la deuxième couche (7) est égale ou supérieure à 80 % en masse.

9. Pneumatique selon la revendication 8, dans lequel chacun parmi l'agent de couplage silane compris dans la composition de caoutchouc constituant la première couche (6) et l'agent de couplage silane compris dans la composition de caoutchouc constituant la deuxième couche (7) est un agent de couplage silane à base mercapto.

10. Pneumatique selon l'une quelconque des revendications 1 à 9, dans lequel la composition de caoutchouc constituant la deuxième couche (7) comprend un composant résine.

11. Pneumatique selon l'une quelconque des revendications 1 à 10, dans lequel l'épaisseur de la troisième couche (8) est inférieure à chacune parmi l'épaisseur de la première couche (6) et l'épaisseur de la deuxième couche (7).

12. Pneumatique selon l'une quelconque des revendications 1 à **11,** dans lequel la bande de roulement a une partie en contact avec le sol (2) étant subdivisée par une pluralité de rainures circonférentielles (1), et la partie la plus profonde de la rainure au fond d'au moins une des rainures circonférentielles (1) est formée pour être située sur le côté intérieur de la partie la plus externe de la deuxième couche (7) dans la direction radiale du pneumatique.

13. Pneumatique selon la revendication 12, dans lequel la partie en contact avec le sol (2) est pourvue d'un siphon, aucune extrémité duquel siphon n'est ouverte vers la rainure circonférentielle (1).
